# EUROPEAN PATENT SPECIFICATION

(11) **EP 0 484 508 B1**
(45) Date of publication and mention of the grant of the patent: **10.01.1996**
(21) Application number: 91910738.3
(22) Date of filing: 17.05.1991
(51) Int. Cl.: A23J 3/08

(54) **PROTEINACEOUS FAT SUBSTITUTE**
PROTEINARTIGES MATERIAL ALS ERSATZ FÜR FETT
PRODUIT DE SUBSTITUTION PROTEINIQUE DE MATIERE GRASSE

(30) Priority: 17.05.1990 US 524598
(43) Date of publication of application: 13.05.1992
(73) Proprietor: THE NUTRASWEET COMPANY, Deerfield, IL 60015 (US)
(72) Inventor: FANG, Chun-Shun, Bloomingdale, IL 60108 (US); SNOOK, René, Buffalo Grove, IL 60089 (US)
(74) Representative: Blum, Rudolf Emil Ernst
(86) International application number: US9103507
(87) International publication number: WO9117665

(56) References cited:
- EP-A- 0 356 094
- WO-A-89/05587
- US-A- 4 855 156
- Principles of Food Chemistry (DeMan) 1980. The AVI Publishing Company, Inc. Westport, Connecticut, page 93.

## Description

The present invention relates generally to microparticulated denatured proteins which are useful as a replacement for fat in food products, and more particularly to an improved method for making proteinaceous fat substitutes from soluble and coagulable proteins.

### Background

Fat-rich foods enjoy considerable popularity and make up a significant proportion of the diets of many people. The undesirable nutritional impact related to the consumption of these popular types of food products is widely recognized and ways to reduce the fat contained in these food products have been developed to address the problems caused by consuming fat-rich foods.

Singer, et al., U.S. Patent 4,734,287 describes a microparticulated denatured protein fat substitute made from dairy whey protein. The whey protein fat substitute is a macrocolloid of spheroidal microparticles which are formed upon heating an aqueous whey protein solution under high shear conditions. In order to form microparticulated protein having a range of microparticle sizes to most closely mimic the mouth-feel and organoleptic characteristics of fat, it is disclosed that the pH of the aqueous protein solution should be lowered by the addition of acid to a value which is below the midpoint of the isoelectric curve for the protein solution before heating. In addition, the reference indicates that it is preferred that processing aids are suitably added to the protein before heat treatment in order to diminish the aggregation of the microparticles.

The European Patent Application, Publication No. 0 323 529 published July 12, 1989 describes the application of the technology developed and disclosed by Singer, et al., to other soluble and coagulable proteins, in addition to whey protein, which form macrocolloids of spherical microparticles when heated under high shear conditions. The microparticulated proteins which best mimic the mouth-feel and organoleptic characteristics of fat are also disclosed to be formed in an aqueous solution having a pH value below the midpoint of the isolectric curve of the proteins and preferably in the presence of processing aids which prevent aggregation of the microparticles.

EPA 0 323 529 also describes a high shear apparatus which is adapted to provide the heat and high sheer conditions needed to fully exploit the Singer, et al., technology. The disclosed apparatus is an enclosed container fitted with a rotor which generates a toroidal flow of a fluid protein solution and which subjects the fluid to controlled heat and high shear. This high shear apparatus is also described in U.S. Patent 4,744,521.

Both U.S. Patent 4,734,287 and EPA 0 323 529 disclose and recommend formulating soluble and coagulable protein feedstocks with a variety of processing aids, such as aggregate blocking agents, before treatment by heat and high shear. Useful aggregate blocking agents include gums such as xanthan gum, carrogeenan, alginate and calcium sterayl lactylate, datem esters, maltodextrins or lecithin. Moreover, in the process for forming denatured whey microparticles, it has been noted that processing the whey protein feedstock with a suitable solvent before heating is advantageous not only to extract soluble lipids such as cholesterol but also to remove whey protein components which may give rise to off-flavors in the microparticulated product as a result of heat treatment.

A need in the food industry continues to exist for improved processes for the production of suitably sized and shaped protein microparticles for fat replacement use.

WO-A 89 05587 discloses - besides of the use of proteinaceous fat substitutes prepared from acidified protein solutions according to e.g. U.S. 4 734 287 to prepare low fat food products - a process for the production of fat substitutes, wherein the denaturation is performed at a higher pH but in the necessary presence of at least a nucleating agent.

EP-A-356 094 discloses a low fat continuous fat phase food spread which contains a dispersion of a protein macrocolloidal composition. Storage protein particles are produced by subjecting an aqueous slurry of heat-settable protein, at a pH above the isoelectric point of the protein, to a shearing force.

Optimally, such an improved process would diminish or eliminate the need for any substantial amounts of processing aids, such as aggregate blocking agents, in the soluble and coagulable protein solution feedstocks. Improved processes would also allow for the production of denatured whey protein microparticles which have desired flavor characteristics without resort to a solvent extraction processing step before heat and high shear treatment.

### BRIEF SUMMARY

The present invention provides a novel process to produce denatured protein microparticles characterized by heating an aqueous protein solution under high shear conditions at a pH value greater than the midpoint of the isoelectric curve of the proteins in the aqueous solution.

According to one aspect of the invention, there is provided a process which includes heating undenatured substantially soluble and coagulable proteins at heat denaturing temperatures in an aqueous solution, at a pH greater than the midpoint of the isoelectric curve of the proteins, under shear conditions selected and carried out for a time sufficient so as to avoid the formation of any substantial amounts of fused particulate proteinaceous aggregates having diameters in excess of about 2 µm (microns) while also forming denatured proteinaceous macrocolloidal particles which are greater than about 0.1 µm (microns) in diameter.

In a presently preferred practice of this process, the aqueous protein solution includes soluble and coagulable whey proteins. Preferably the aqueous solution contains about 10-36 % by weight soluble whey protein and more preferably the aqueous solution comprises about 18-25 % by weight soluble whey protein.

According to a preferred practice of the improved processes of the invention the pH value of an aqueous whey protein solution feedstock for heat and shear treatment is greater than about 5, and preferably the pH value is about 5.8-6.9.

### DETAILED DESCRIPTION

The disclosures of Singer, et al., U.S. Patent 4,734,287, EPA Publication No. 0 323 529, published July 12, 1989 and U.S. Patent 4,961,953 are referred to for the purpose of describing the general state of the art in processes and apparatus suitable for the production of denatured protein microparticles and in processes suitable to extract off-flavor generating components from whey proteins which may be used to generate microparticles.

The present invention resides in part in the discovery that microparticles may readily be produced from aqueous solutions of soluble and coagulable protein feedstocks which are subjected to heat and shear in conventional apparatus, such as the apparatus described in U.S. Patent 4,828,396, at pH values greater than the midpoint of the isoelectric curve of the proteins. Not only is the undesired aggregation of microparticles avoided at pH values greater than the midpoint of the isoelectric curve of the proteins but it has also been found that the need for additional processing aids, such as aggregrate blocking agents, is significantly reduced or eliminated. Furthermore, when aqueous whey protein solutions are used as the feedstock for microparticle formation, it has been found that the need to subject the aqueous protein solution feedstock to extraction processes before heating in order to avoid off flavors or odors is reduced or eliminated.

Processes according to the present invention are advantageously applied to aqueous solutions of heat coagulable proteins which have a protein concentration of about 10-36% by weight. In general, starting protein sources for practice of the invention should include in excess of about 80% soluble proteins and preferably in excess of about 90% soluble proteins. Protein sources providing less than about 80% soluble proteins are likely to include over-sized particles or particle aggregates which may significantly detract from the desired organoleptic characteristics of the product.

The preferred sources of suitable protein for the practice of the present process are raw material sources that provide soluble, globular, non-fibrous proteins which have not previously been subjected to protein denaturing processing. A preferred protein source is liquid whey protein concentrate having about 18-25 % by weight protein, about 37-50 % by weight solids, and about 5-13 % by weight lactose.

The pH value of the protein solutions is established above the midpoint of the isoelectric curve of the proteins in solution which is a pH value above the midpoint of the composite curve of the various isoelectric points of individual protein components. Unexpectedly, establishing the pH above the midpoint of the isoelectric curve allows the formation of properly sized particle populations which provide an improved product. Obviously care should be exercised to avoid pH values so much in excess of the midpoint of the isoelectric curve that base hydrolysis of the proteins occurs.

Preferably, an aqueous protein solution having a protein concentration between about 10-36% by weight is used in the present process. Protein concentrations between about 15-26% by weight are most preferred. Aqueous solutions with protein concentrations less than about 10% by weight may be used and the formation of the desired microparticles occurs, however, the resulting microparticulated product may be too dilute to function as a fat substitute without further concentration. Aqueous solutions with protein concentrations greater than about 36% by weight tend to provide microparticulated products which are extremely viscous and which may cause processing difficulties typically associated with viscous materials.

According to the present invention, the aqueous protein solutions are subjected to elevated temperatures for varying periods of time under shear rates which may be as high as or greater than 40,000 reciprocal seconds. Typical processing temperatures range from about 68-120°C and typical processing times range from about 3 seconds to about 30 minutes or longer. Processing times from about 10 seconds to about 2 minutes are preferred. In general, processing times are longer at lower temperatures and shorter at higher temperatures. For example, processing times at 68°C may be about 20 minutes, processing times at 90-95°C may be about 20 seconds to about 5 minutes and processing times at 120°C may be about 3 seconds.

Aggregate blocking agents may optionally be added to the aqueous protein solutions if desired. The aggregate blocking agent may be selected or the concentration of the agent may be adjusted so that it does not alter the desired pH of the mixture.

Optional ingredients may also be added to the protein solution feedstocks and may include colorants, flavors, stabilizers, preservatives, and the like in quantities sufficient to provide desired characteristics in the microparticulated products. These types of ingredients may generally be present in or added to the solution without adverse effect.

The following example relates to a preferred method for the production of denatured protein microparticles produced from an aqueous whey protein concentrate solution having a pH value of about 6.

### EXAMPLE 1 - MICROPARTICULATED WHEY PROTEIN

A commercially available liquid whey protein is treated by ultrafiltration and evaporation until a mixture having about 42% by weight solids and about 50% - 55% by weight protein, on a dry basis is obtained. The liquid whey protein concentrate is deaerated in a Versator deaerater and bottom fed into a sanitary tank equipped for a non-aerating agitation.

The deaerated mixture is then pumped (272 kg/hr, 600 lbs/hr), by a positive displacement pump through an inline strainer (300 µm cheesecloth), a mass flow meter and plate heat exchanger which raises the temperature of the mixture to about 76.7°C (170°F), into a heated holding device.

The heated holding device includes two concentric scraped surface heat exchangers connected in series. Each heat exchanger provides a hold time of about 3.6 minutes at a flow rate of about 136 kg/hr (300 lbs/hr). Both of these heat exchangers are heated to maintain the hold temperature set by the plate heat exchanger.

The mixture is then pumped from the holding device into an eccentric scraped surface heat exchanger. This scraped surface heat exchanger cools the mixture to a temperature of about 73.9°C (165°F), a temperature lower than the target peak temperature inside a heat and high shear generating ("MicroCooker") apparatus. The mixture then flows directly into a microcooker apparatus as described in U.S. Patent 4,828,396 with the exception that the inlet and outlet ports have been interconverted, i.e., the inlet port is disposed where the outlet port is shown in the patent drawing and the outlet port is located at the bottom of the bowel shaped vessel. The temperature of the mixture is raised to 93.3°C (200°F) within 10 seconds under high shear conditions. Rigorous control of the mixture temperature at 93.3°C (200°F) is maintained in the microcooker apparatus by a cascade control loop. The control loop senses the temperature of product exiting the microcooker apparatus and holds the temperature constant by regulating the temperature of the mixture leaving the eccentric scraped surface heat exchanger.

The speed of the rotor in the microcooker apparatus is held constant at about 5200 rpm. At this rpm, the shear rate is about 40,000 reciprocal seconds at the tips of the rotor which has a diameter of approximately 0.178m (7 inches).

After exiting the microcooker apparatus, the product flows directly into an eccentric scraped surface heat exchange and is cooled with vigorous agitation to less than 54.4°C (130°F). The cooled product then flows through an additional heat exchanger (scraped surface or plate type) to reduce its temperature to less than 12.8°C (55°F).

## Claims

1. A process comprising heating undenatured substantially soluble and coagulable proteins at heat denaturing temperatures in an aqueous solution under shear conditions selected and carried out for a time sufficient so as to avoid the formation of any substantial amounts of fused particulate proteinaceous aggregates having diameters in excess of about 2 µm (microns) while also forming denatured proteinaceous macrocolloidal particles which are greater than about 0.1 µm (microns) in diameter, characterized in that the denaturation process is carried out at a pH greater than the midpoint of the isoelectric curve of said proteins but below the pH at which hydrolysis of the proteins occurs and in the absence of a nucleating agent.

2. The process of claim 1, wherein the solution of proteins comprises whey proteins.

3. The process of claim 2, wherein the pH of the aqueous whey protein solution is greater than 5.

4. The process of claim 3, wherein the pH of the aqueous whey protein solution is about 5.8-6.9.

5. The process of claim 2, wherein the aqueous whey protein solution comprises about 10-36 wt.% soluble whey protein.

6. The process of claim 5, wherein the aqueous whey protein solution comprises about 18-25 wt.% soluble whey protein.

## Patentansprüche

1. Verfahren umfassend Erhitzen undenaturierter, im wesentlichen löslicher und koagulierbarer Proteine bei Hitzedenaturierungstemperaturen in einer wässrigen Lösung unter Scherbedingungen, die ausgewählt sind und während einer Zeit ausgeführt werden, die ausreichend ist, um die Bildung wesentlicher Mengen verschmolzener teilchenförmiger proteinartiger Aggregate mit Durchmessern über etwa 2 µm (Mikronen) zu vermeiden, wohingegen auch denaturierte proteinhaltige teilchenförmige makrokolloidale Teilchen gebildet werden, die grösser als etwa 0,1 µm (Mikronen) im Durchmesser sind, dadurch gekennzeichnet, dass das Denaturierungsverfahren bei einem pH ausgeführt wird, der grösser ist als der Mittelpunkt der isoelektrischen Kurve der genannten Proteine, aber unterhalb dem pH, bei welchem Hydrolyse der Proteine auftritt und in Abwesenheit eines kernbildenden Mittels.

2. Verfahren gemäss Anspruch 1, in dem die Proteinlösung Molkeproteine enthält.

3. Verfahren gemäss Anspruch 2, in dem der pH der wässrigen Molkeprotein-Lösung mehr als 5 beträgt.

4. Verfahren gemäss Anspruch 3, in dem der pH der wässrigen Molkeprotein-Lösung etwa 5,8 - 6,9 beträgt.

5. Verfahren gemäss Anspruch 2, in dem die wässrige Molkeprotein-Lösung etwa 10-36 Gew.-% lösliches Molkeprotein enthält.

6. Verfahren gemäss Anspruch 5, in dem die wässrige Molkeprotein-Lösung etwa 18-25 Gew.-% lösliches Molkeprotein enthält.

## Revendications

1. Un procédé comprenant le chauffage des protéines non-dénaturées, essentiellement solubles et coagulables à des températures de dénaturation par le chauffage dans une solution aqueuse sous des conditions de cisaillement de lame sélectionnées et effectuées pour une période suffisante afin d'éviter la formation de toute quantité significative d'agrégats de particules protéiniques associés a un diamètre dépassant environ 2 µm (microns) tout en formant également des particules macrocolloïdales protéiniques dénaturées qui sont plus grandes qu'environ 0.1 µm (microns) de diamètre, caractérisées en ce que le procédé de dénaturation est effectué à des pH dépassant le point du milieu de la courbe isoélectrique de ladite protéine mais étant en dessous du pH où l'hydrolyse des protéines se fait et en absence d'un agent de nucléation.

2. Le procédé suivant la revendication 1, où la solution des protéines comprend des protéines du petit lait.

3. Le procédé suivant la revendication 2, où le pH de la solution aqueuse du petit lait dépasse 5.

4. Le procédé suivant la revendication 3, où le pH de la solution aqueuse du petit lait est à environ 5.8-6.9.

5. Le procédé suivant la revendication 2, où la solution aqueuse du petit lait comprend environ 10-36 % par poids de protéine de petit lait soluble.

6. Le procédé suivant la revendication 5, où la solution aqueuse du petit lait comprend environ 18-25 % par poids de protéine de petit lait soluble.
